# FASCICULE DE BREVET EUROPEEN

(11) **EP 3 944 294 B1**
(45) Date de publication et mention de la délivrance du brevet: **05.11.2025**
(21) Numéro de dépôt: 21186810.4
(22) Date de dépôt: 20.07.2021
(51) Int. Cl.: H01L 21/02, H01L 21/311, G06F 21/44, G06F 21/73, H01L 21/768, H01L 23/522, H01L 23/528, H01L 23/00, H04L 9/08, H01L 21/321

(54) **PROCÉDÉ DE RÉALISATION D'UNE ZONE D'INDIVIDUALISATION D'UN CIRCUIT INTÉGRÉ**
VERFAHREN ZUR HERSTELLUNG EINER INDIVIDUALISIERUNGSZONE EINES INTEGIERTEN SCHALTKREISES
METHOD FOR MANUFACTURING AN INDIVIDUALISATION AREA OF AN INTEGRATED CIRCUIT

(30) Priorité: 22.07.2020 FR 2007718
(43) Date de publication de la demande: 26.01.2022
(73) Titulaire: Commissariat à l'Energie Atomique et aux Energies Alternatives, 75015 Paris (FR)
(72) Inventeur: POSSEME, Nicolas, 38054 GRENOBLE Cedex 09 (FR); LANDIS, Stefan, 38054 GRENOBLE Cedex 09 (FR)
(74) Mandataire: Hautier IP

(56) Documents cités:
- EP-A2- 2 750 169
- WO-A1-2018/175973
- US-A1- 2007 269 907
- US-A1- 2016 254 227
- POSSEME N ET AL: "Residue growth on metallic-hard mask after dielectric etching in fluorocarbon-based plasmas. I. Mechanisms", JOURNAL OF VACUUM SCIENCE AND TECHNOLOGY: PART B, AVS / AIP, MELVILLE, NEW YORK, NY, US, vol. 28, no. 4, 16 July 2010 (2010-07-16), pages 809 - 816, XP012144196, ISSN: 1071-1023, DOI: 10.1116/1.3456182

## Description

### DOMAINE TECHNIQUE

La présente invention concerne l'individualisation des circuits intégrés. Elle trouve pour application particulièrement avantageuse la protection de circuits intégrés, de composants ou de dispositifs intégrant de tels circuits.

### ETAT DE LA TECHNIQUE

L'individualisation d'un circuit intégré dans un composant permet l'identification unique de ce composant. Cela permet par exemple de protéger le composant contres des attaques par émulation des fonctions que le composant est sensé faire.

Afin d'identifier de manière unique un circuit intégré, il existe des solutions visant à utiliser les dispersions fonctionnelles inhérentes aux circuits intégrés. Les résistances des lignes d'interconnexion métallique ou des vias différent d'un circuit à l'autre, ce qui induit des chutes de tension le long du chemin emprunté par le signal électrique. Le temps de réponse des signaux diffère donc du fait de la variabilité induite sur les temps de propagation des signaux aux limites des contraintes électroniques du circuit, ou encore du fait de l'instabilité au démarrage des composants comme par exemple les mémoires SRAMS (acronyme de Static Random Access Memory signifiant mémoire vive statique) qui présentent un état unique à chaque démarrage.

US2016/254227 décrit une méthode de fabrication d'un dispositif semi-conducteur consistant à générer une identification unique pour le dispositif semi-conducteur en formant aléatoirement des défauts dans un ou plusieurs composants de circuit du dispositif.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

Il existe donc un besoin consistant à limiter, voire à résoudre, les problématiques des solutions connues.

### RESUME

Pour atteindre cet objectif, selon un mode de réalisation on prévoit un procédé de réalisation d'une zone d'individualisation d'une puce microélectronique, ladite puce comprenant au moins :
- un premier et un deuxième niveaux de pistes électriques,
- un niveau d'interconnexions situées entre les premiers et deuxième niveaux de pistes électriques et comportant des vias destinés à connecter électriquement des pistes électriques du premier niveau avec des pistes électriques du deuxième niveau,

Le procédé comprend au moins les étapes suivantes effectuées au niveau de la zone d'individualisation de la puce :
- fournir au moins le premier niveau de pistes électriques et au moins une couche diélectrique recouvrant le premier niveau,
- réaliser sur l'au moins une couche diélectrique un masque dur métallique présentant des ouvertures de masque situées au moins en partie au droit des pistes électriques et rendant accessible l'au moins une couche diélectrique,
- graver l'au moins une couche diélectrique au travers des ouvertures de masque par au moins une gravure à base d'une chimie fluorocarbonée, de façon à former des ouvertures débouchant sur le premier niveau des pistes électriques,
- mettre le masque dur métallique en présence d'oxygène et d'humidité de façon à former des résidus aléatoirement répartis au niveau de certaines ouvertures, les ouvertures comprenant alors des ouvertures avec résidus et des ouvertures sans résidus,
- remplir les ouvertures avec un matériau électriquement conducteur de sorte à former au moins les vias du niveau d'interconnexions, lesdits vias comprenant des vias fonctionnels au niveau des ouvertures sans résidus et des vias inactifs au niveau des ouvertures avec résidus.

Ainsi, les résidus empêchent que le matériau électriquement conducteur soit correctement déposé dans certaines ouvertures, notamment en affectant la conformité du dépôt. Ces résidus conduisent alors à la formation de défauts, typiquement des cavités, dans certains vias et possiblement aussi dans certaines pistes électriques du deuxième niveau.

Le procédé proposé permet donc de dégrader volontairement mais aléatoirement le niveau d'interconnexions et/ou le deuxième niveau de pistes électriques. Cette dégradation volontaire permet de créer des vias inactifs répartis de façon aléatoire au sein de la zone d'individualisation de la puce. Un via peut être rendu inactif par des défauts formés dans le via et/ou dans la piste électrique surmontant ce via. Le diagramme de réponse de la puce ou du circuit intégré sera donc intimement lié au caractère aléatoire de la répartition des vias inactifs. Cette réponse sera par conséquent unique. Chaque circuit intégré réalisé par ce procédé génère ainsi une réponse différente. Par ailleurs, le diagramme de réponse du circuit intégré sera stable dans le temps contrairement aux solutions décrites ci-dessus dans la section relative à l'état de la technique.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en œuvre et à un cout réduit, afin de réaliser une zone d'individualisation d'un circuit intégré.

Un autre aspect concerne un procédé de réalisation d'un dispositif microélectronique comportant au moins un circuit intégré, le circuit intégré comportant au moins:
- un premier et un deuxième niveaux des pistes électriques,
- un niveau d'interconnexions situées entre les premiers et deuxième niveaux des pistes électriques et comportant des via destinées à connecter électriquement des pistes du premier niveau avec des pistes du deuxième niveau
- une zone d'individualisation du circuit intégré.

La zone d'individualisation est réalisée en mettant en œuvre le procédé décrit précédemment, de préférence sur une partie seulement du circuit intégré.

Un autre aspect concerne un dispositif microélectronique et un procédé de réalisation d'un dispositif microélectronique.

Le dispositif microélectronique comporte au moins un circuit intégré comportant au moins une zone d'individualisation et une zone fonctionnelle disjointes, lesdites zones comprenant
- un premier et un deuxième niveaux des pistes électriques,
- un niveau d'interconnexions situé entre les premiers et deuxième niveaux des pistes électriques et comportant des vias destinées à connecter électriquement des pistes du premier niveau avec des pistes du deuxième niveau,

Avantageusement, la zone fonctionnelle comprend essentiellement des vias fonctionnels ne présentant pas de défauts tels que des résidus d'oxyde métallique ou des cavités, et la zone d'individualisation comprend des vias inactifs présentant des défauts tels que des résidus d'oxyde métallique ou des cavités, la densité de vias inactifs dans la zone d'individualisation étant supérieure d'au moins 80% à la densité de vias inactifs dans la zone fonctionnelle.

Le procédé de réalisation d'un tel dispositif comprend typiquement la mise en œuvre du procédé de réalisation d'une zone d'individualisation décrit par ailleurs, sur une partie seulement du circuit intégré.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut s'agir d'un dispositif destiné à assurer une fonction électronique, optique, mécanique etc. Il peut aussi s'agir d'un produit intermédiaire uniquement destiné à la réalisation d'un autre dispositif microélectronique.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1A représente en vue de dessus une zone fonctionnelle comprenant des pistes électriques du deuxième niveau associées chacune à deux vias sous-jacents, lesdits vias comprenant des vias fonctionnels, selon un mode de réalisation de la présente invention.
La figure 1B représente en coupe une piste électrique du deuxième niveau et une piste électrique du premier niveau, reliées entre elles par un via fonctionnel.
La figure 2A représente en vue de dessus une zone d'individualisation comprenant des pistes électriques du deuxième niveau associées chacune à deux vias sous-jacents, lesdits vias comprenant des vias fonctionnels et des vias inactifs, selon un mode de réalisation de la présente invention.
La figure 2B représente en coupe une piste électrique du deuxième niveau et une piste électrique du premier niveau, reliées entre elles par un via inactif, selon un mode de réalisation de la présente invention.
Les figures 3A à 3H illustrent des étapes d'un mode de réalisation d'une zone d'individualisation d'un circuit intégré selon la présente invention.
La figure 4A est une image de microscopie électronique d'un masque dur métallique en vue dessus, avant formation des résidus, selon un mode de réalisation de la présente invention.
La figure 4B est une image de microscopie électronique d'un masque dur métallique en vue dessus, après formation des résidus, selon un mode de réalisation de la présente invention.
La figure 5A est une image de microscopie électronique d'un masque dur métallique en vue dessus, avant formation des résidus, selon un autre mode de réalisation de la présente invention.
La figure 5B est une image de microscopie électronique d'un masque dur métallique en vue dessus, après formation des résidus, selon un autre mode de réalisation de la présente invention.
La figure 6 est une image de microscopie électronique en vue de dessus d'une zone comprenant des pistes électriques du deuxième niveau associées à des vias inactifs sous-jacents, selon un mode de réalisation de la présente invention.
La figure 7A représente en vue de dessus une zone fonctionnelle comprenant des pistes électriques du deuxième niveau associées chacune à un via sous-jacent, lesdits vias comprenant des vias fonctionnels, selon un exemple de réalisation de la présente invention.
La figure 7B représente en vue de dessus une zone d'individualisation comprenant des pistes électriques du deuxième niveau associées chacune à un via sous-jacent, lesdits vias comprenant des vias fonctionnels et des vias inactifs, selon un exemple de réalisation de la présente invention.
Les figures 8A 8H illustrent des étapes de fabrication d'un circuit intégré comprenant au moins une zone fonctionnelle et une zone d'individualisation, selon un exemple de réalisation de la présente invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs des différentes couches, vias, motifs et reliefs ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un exemple, les ouvertures présentent une dimension minimale L₂ inférieure à 90 nm et de préférence inférieure à 70 nm. Cette dimension minimale L₂ correspond typiquement à la dimension critique CDᵥᵢₐ du via. Cette dimension critique est par exemple le diamètre du via, pris selon une coupe parallèle aux différents niveaux des pistes électriques intégrées. Une dimension L₂ inférieure à 70 nm permet d'augmenter la probabilité qu'un résidu génère un défaut de nature à inactiver le via. Un tel défaut peut être une cavité.

Selon un exemple, le masque dur métallique est à base de Ti ou de TiN ou de TaN. Les résidus métalliques peuvent être à base d'oxyde de titane TiO₂.

Selon un exemple, l'au moins une gravure est une gravure plasma.

Selon un exemple, la mise en présence du masque dur métallique avec de l'oxygène et de l'humidité se fait par remise à l'air de préférence pendant au moins douze heures, et de préférence au moins vingt-quatre heures.

Selon un exemple, la mise en présence du masque dur métallique avec de l'oxygène et de l'humidité se fait par mise à l'air du masque dur métallique.

Selon un autre exemple, la mise en présence du masque dur métallique avec de l'oxygène et de l'humidité se fait dans une atmosphère plus riche en oxygène et /ou en humidité que l'air. Cela permet d'augmenter la cinétique de formation des résidus. Selon un exemple, la mise en présence d'oxygène et d'humidité du masque dur métallique se fait sous une atmosphère présentant un taux d'oxygène et/ou un taux d'humidité plus élevé que l'air ambiant. Cela permet d'augmenter la cinétique de formation des résidus, l'eau et l'air jouant un rôle de catalyseur.

Selon un exemple, la mise en présence d'oxygène et d'humidité du masque dur métallique se fait au moins en partie par oxydation. Selon un exemple, l'oxydation est une oxydation par hydrolyse.

Selon un exemple, l'au moins une gravure est configurée pour former des ouvertures comprenant chacune une ouverture de vias et une ouverture de piste.

Selon un exemple, le remplissage des ouvertures avec un matériau électriquement conducteur est configuré de sorte à former les vias du niveau d'interconnexions au niveau desdites ouvertures de vias et à former simultanément les pistes électriques du deuxième niveau au niveau desdites ouvertures de piste.

Selon un exemple, l'au moins une gravure comprend une première gravure et une deuxième gravure destinées à former respectivement les ouvertures de vias et les ouvertures de piste.

Selon un exemple, la première gravure est à base d'une chimie fluorocarbonée comme C₄F₆ /N₂ /Ar.

Selon un exemple, la deuxième gravure est à base d'une chimie C₄F₈ /N₂ /Ar/O₂.

Selon un exemple, l'au moins une couche diélectrique comprend une couche à base de SiOCH dense ou poreux (p-SiOCH), ou à base de SiO₂.

Selon un exemple, plusieurs vias sont associés à une même piste électrique du deuxième niveau et à une même piste électrique du premier niveau. Cela permet d'avoir un taux de conductivité nominale entre ces pistes qui soit fonction du taux de vias inactifs.

Selon un exemple, la puce présente au moins une autre zone, distincte de la zone d'individualisation, destinée à former une zone fonctionnelle de la puce.

Selon un exemple, un masque de protection est formé sur ladite zone destinée à former la zone fonctionnelle, préalablement à la formation des résidus dans la zone d'individualisation.

La réalisation des vias inactifs aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente typiquement une surface plus grande que la surface de la zone d'individualisation. En particulier, la zone fonctionnelle peut présenter une surface au moins deux fois supérieure à celle de la zone d'individualisation. Le premier et le deuxième niveaux de pistes électriques ainsi que le niveau d'interconnexion s'étendent dans ladite au moins une autre zone.

Dans le cadre de la présente invention, une zone d'individualisation dite PUF est parfaitement différenciée d'une zone fonctionnelle destinée par exemple à effectuer des opérations logiques. La zone d'individualisation quant à elle a principalement et de préférence uniquement comme fonction de permettre l'identification unique de la puce et donc l'authentification de la puce. La zone d'individualisation est accessible distinctement de la zone fonctionnelle. La zone d'individualisation est localisée sur une zone bien délimitée de la puce. La zone d'individualisation est par exemple de forme polygonale, par exemple rectangulaire. Ainsi, n'importe quelle zone défectueuse ne peut pas être assimilable à une zone d'individualisation PUF. De même, n'importe quelle zone non défectueuse ne peut pas être assimilable à une zone fonctionnelle.

Dans la présente demande, les termes « puce » et « circuit intégré » sont employés en synonymes.

Il est précisé que, dans le cadre de la présente invention, le terme via regroupe toutes les connexions électriques tels que les plots, lignes et structures conductrices qui s'étendent, de préférence perpendiculairement, entre deux couches, successives ou non, du circuit intégré, soit entre deux niveaux de pistes électriques. Chaque niveau des pistes électriques s'étend principalement selon un plan et peut comporter des structures micromécaniques fonctionnelles telles que des transistors par exemple. De préférence les vias forment chacun un plot, de section sensiblement circulaire.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, « à base » d'un matériau A, un substrat, un film, une couche comprenant ce matériau A uniquement ou ce matériau A et éventuellement d'autres matériaux, par exemple des éléments dopants.

Plusieurs modes de réalisation de l'invention mettant en œuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B.

Dans le cadre de la présente invention, on qualifie de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl methacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Des couches et/ou des revêtements antireflets peuvent être associés aux résines. Cela permet notamment d'améliorer la résolution de lithographie. Dans la suite, les différents masques à base de résine sont de préférence associés à de telles couches antireflets.

Dans la présente demande, un masque dur métallique est mis en œuvre. Ce masque est qualifié de « dur » par souci de distinction vis-à-vis des masques à base de résine. Un masque dur est parfaitement clair pour l'homme du métier.

Un repère de préférence orthonormé, comprenant les axes x, y, z est représenté sur les figures annexées. Lorsqu'un seul repère est représenté sur une même planche de figures, ce repère s'applique à toutes les figures de cette planche.

Dans la présente demande de brevet, on parlera préférentiellement d'épaisseur pour une couche et de profondeur pour une gravure. L'épaisseur est prise selon une direction normale au plan d'extension principal de la couche, et la profondeur est prise perpendiculairement au plan basal xy du substrat. Ainsi, une couche présente typiquement une épaisseur selon z, et une gravure présente une profondeur selon z également. Les termes relatifs « sur », « surmonte », « sous », « sous-jacent » se réfèrent à des positions prises selon la direction z.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures.

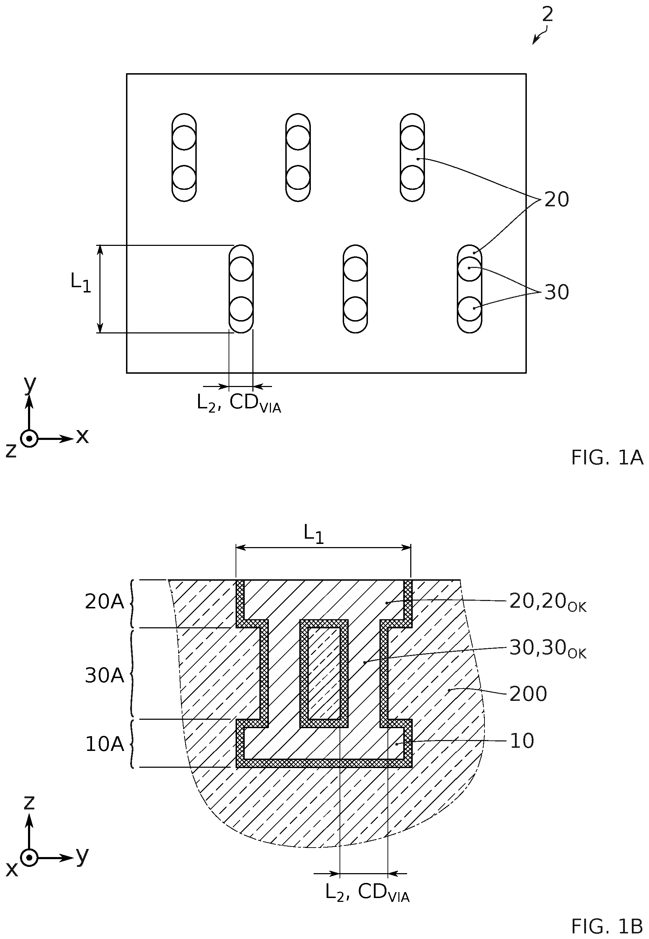

Les figures 1A et 1B représentent de manière schématique un circuit intégré classique comportant un premier niveau 10A de pistes électriques 10, et un deuxième niveau 20A de pistes électriques 20. Chacun de ces niveaux 10A, 20A s'étend principalement selon un plan xy. Ces plans sont sensiblement parallèles entre eux et à un substrat, non illustré, sur lequel reposent ces premier 10A et deuxième 20A niveaux de pistes électriques. Le circuit intégré comprend également un niveau d'interconnexions 30A configuré pour connecter électriquement des pistes 10 du premier niveau 10A avec des pistes 20 du deuxième niveau 20A. Ce niveau d'interconnexions 30A comprend des portions conductrices généralement qualifiées de vias 30. Les différents niveaux de pistes électriques et d'interconnexion sont en outre généralement isolés des autres éléments du circuit intégré par au moins une couche diélectrique 200. On notera que des vias 30 peuvent connecter des pistes de deux niveaux qui ne sont pas directement successifs mais qui sont eux même séparés par un ou plusieurs autres niveaux.

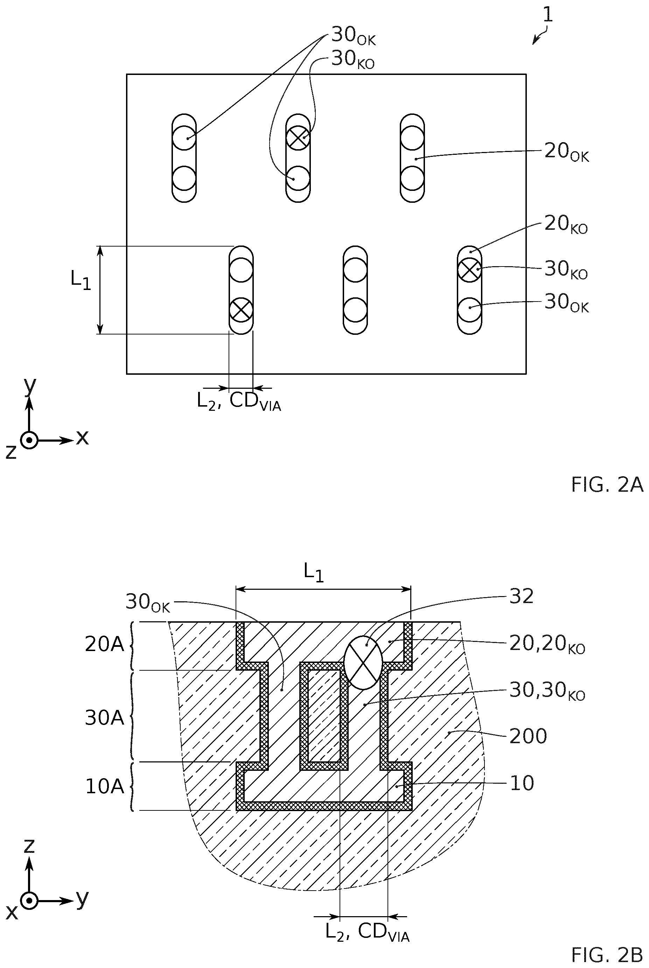

Une portion du circuit intégré forme au moins une zone fonctionnelle 2 illustrée aux figures 1A, 1B et une autre portion du circuit intégré forme au moins une zone d'individualisation 1 illustrée aux figures 2A, 2B.

La zone fonctionnelle 2 est destinée à assurer des fonctions logiques pour le fonctionnement attendu du circuit intégré. Les pistes 20, 20_{OK} du deuxième niveau 20A sont typiquement sans défaut. Les vias 30, 30_{OK} du niveau d'interconnexions 30A sont également typiquement sans défaut. Outre les pistes électriques 10, 20, cette zone fonctionnelle 2 peut comprendre des structures micro-électronique, tel que par exemple des transistors, des diodes, des MEMS etc.

La zone d'individualisation 1, a quant à elle pour fonction de rendre unique chaque circuit intégré. À cet effet, et comme cela sera détaillé par la suite, lors du procédé de fabrication, on prévoit de dégrader aléatoirement le niveau d'interconnexions et/ou le deuxième niveau de pistes électriques de façon à obtenir des vias inactifs 30_{KO}. Plus précisément, on prévoit de créer de manière aléatoire des défauts 32 au niveau de certains vias 30 et/ou de certaines pistes 20, de façon à rendre inactifs ces vias 30_{KO} ou ces pistes 20_{KO}.

Un diagramme de réponse du circuit intégré est obtenu en appliquant une routine de test électrique ou logique aux entrées (pistes 10 du premier niveau 10A par exemple) de la zone d'individualisation 1, puis en mesurant l'état électrique ou logique en sortie (pistes 20 du deuxième niveau 20A pour ce même exemple) de la zone d'individualisation 1. Le principe est que l'on dispose pour chaque circuit intégré d'une zone d'individualisation 1 comprenant un réseau unique de vias fonctionnels 30_{OK} et de vias inactifs 30_{KO}. La réponse de chaque circuit intégré sera donc différente. Chaque circuit intégré pourra donc être identifié de manière unique. La zone d'individualisation 1 peut être qualifiée de zone PUF et la zone fonctionnelle 2 peut être qualifiée de zone non-PUF.

Selon l'invention, le diagramme de réponse du circuit intégré dépend du nombre et de la position des vias inactifs 30_{KO} dans la zone d'individualisation 1.

Comme illustré schématiquement à la figure 2A, une même piste électrique 20 peut être connectée à plusieurs vias 30, 30_{OK}, 30_{KO}. En particulier, la zone d'individualisation 1 peut comprendre des pistes électriques 20_{OK} associées à des vias fonctionnels 30_{OK} uniquement, et/ou des pistes électriques 20_{KO} associées à des vias inactifs 30_{KO} uniquement, et/ou des pistes électriques 20 associées à la fois à des vias fonctionnels 30_{OK} et à des vias inactifs 30_{KO}. Cela permet d'obtenir une résistance de contact au niveau de la piste électrique 20, 20_{OK}, 20_{KO} qui varie en fonction du nombre de via inactifs 30_{KO}. Dans le cas illustré où deux vias 30 sont associés à une même piste électrique 20, cette résistance de contact peut ainsi prendre trois valeurs différentes. Ces valeurs correspondent typiquement à :
- environ 0% de conductivité nominale (deux vias inactifs 30_{KO} par piste 20_{KO}),
- environ 50% de conductivité nominale (un via inactif 30_{KO} et un via fonctionnel 30_{OK} par piste 20),
- environ 100% de conductivité nominale (deux vias fonctionnels 30_{OK} par piste 20_{OK}).

Dans le cas (non illustré) où trois vias 30 sont associés à une même piste électrique 20, cette résistance de contact peut ainsi prendre quatre valeurs différentes. Ces valeurs correspondent typiquement à :
- environ 0% de conductivité nominale (trois vias inactifs 30_{KO} par piste 20 _{KO}),
- environ 33% de conductivité nominale (deux vias inactifs 30_{KO} et un via fonctionnel 30_{OK} par piste 20),
- environ 66% de conductivité nominale (un via inactif 30_{KO} et deux vias fonctionnels 30_{OK} par piste 20),
- environ 100% de conductivité nominale (trois vias fonctionnels 30_{OK} par piste 20_{OK}).

En augmentant le nombre de vias 30 par piste 20, le nombre de combinaisons d'état de conductivité électrique augmente. Cela augmente le nombre de diagrammes de réponse possibles du circuit intégré.

Pour rendre un via inactif, un défaut 32 - par exemple une cavité - est volontairement créé dans le via 30 ou entre le via 30 et la piste 20, comme illustré à la figure 2A.

À cette fin, le procédé selon l'invention prévoit de perturber aléatoirement le remplissage par le matériau conducteur du via 30 et/ou de la piste 20.

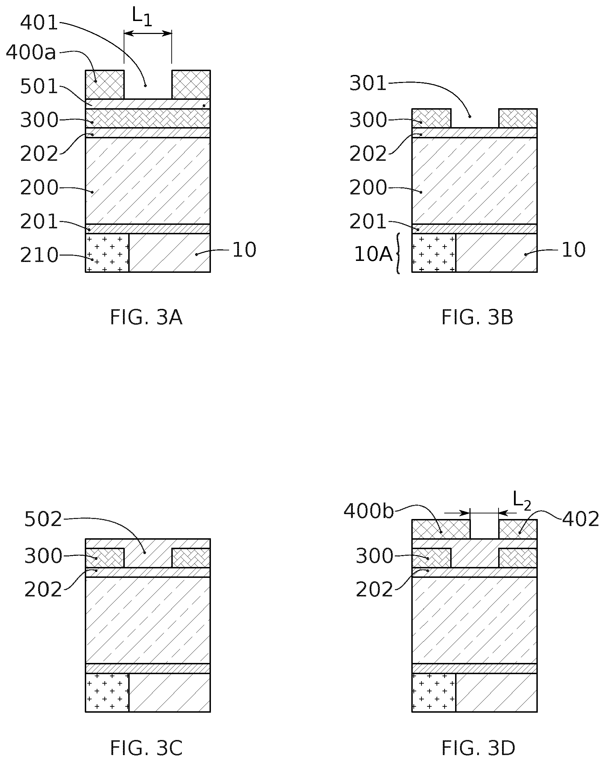

Les figures 3A à 3H illustrent un exemple de réalisation de ce procédé dans le cadre d'une technique de fabrication de vias 30 et de pistes 20 par remplissage simultané de matériau conducteur dans des ouvertures de vias 303 et dans des ouvertures de pistes 302, selon un procédé dit « dual damascene ». Le procédé s'intègre dans la fabrication de composants semi-conducteur au niveau du back end, c'est-à-dire lors de la réalisation des niveaux d'interconnections électriques.

La figure 3A illustre en coupe différentes couches en empilement selon z, formées sur le premier niveau de pistes 10A en prévision de la formation du niveau d'interconnexion 30A et du deuxième niveau de pistes 20A.

Le premier niveau de pistes 10A comprend des pistes électriques 10. Ces pistes électriques 10 sont formées dans un matériau conducteur tel que le cuivre ; ces pistes électriques 10 sont typiquement encapsulées par une couche diélectrique 210. Cette couche diélectrique a également pour fonction de former une barrière contre la diffusion du cuivre. Cette couche diélectrique 210 est par exemple formée de SiO₂.

A partir du premier niveau de pistes 10A, l'empilement de couches peut comprendre les couches suivantes :
- De façon préférée, une couche d'arrêt de gravure 201, par exemple à base de SiCN. Cette couche SiCN 201 est typiquement déposée par dépôt chimique en phase vapeur assisté par plasma PECVD (plasma enhanced-chemical vapor deposition). Elle peut présenter une épaisseur inférieure à 50nm, de préférence comprise entre 10 nm et 40 nm.
- Une couche diélectrique 200, par exemple une couche d'oxyde de silicium dopée au carbone SiOCH. Cette couche SiOCH peut être dense ou poreuse (p-SiOCH), par exemple avec une porosité de l'ordre de 25%. Elle présente typiquement une constante diélectrique peu élevée, par exemple de l'ordre de 2,5. Elle peut ainsi être qualifiée de couche ULK (Ultra Low k). Cette couche SiOCH 200 peut être déposée par PECVD ou par centrifugation. Elle peut présenter une épaisseur typiquement comprise entre 50 nm et 500 nm.
- Optionnellement, une couche d'oxyde de silicium 202. Cette couche 202 peut être déposée par PECVD. Elle peut présenter une épaisseur de l'ordre de 20 nm à 50 nm. Elle permet typiquement de limiter l'endommagement de l'empilement de couches diélectriques, lors d'une étape ultérieure de planarisation par polissage mécano-chimique (CMP) par exemple.
- Un masque dur métallique 300. Ce masque dur métallique 300 peut être à base de titane Ti ou de nitrure de titane TiN ou de nitrure de tantale TaN. Il peut être formé par dépôt physique en phase vapeur (PVD). Il présente typiquement une épaisseur comprise entre 15 nm et 50 nm.

Le masque 300 est surmonté par un premier masque 400a présentant des ouvertures 401. Ces ouvertures 401 du masque 400a servent notamment à ouvrir le masque dur métallique 300. Les ouvertures 401 sont situées au moins en partie au droit des pistes électriques 10. Les ouvertures 401 présentent une dimension L1 comprise entre 50 nm et 500 nm. Cette dimension L1 correspond à une dimension caractéristique des pistes 20 du deuxième niveau 20A. Le premier masque 400a permet notamment de définir les pistes 20 du deuxième niveau 20A.

En fonction de la technique mise en œuvre pour ouvrir le masque 300, le masque 400a peut être formé d'une ou plusieurs couches. Il peut être à base de résine photosensible, par exemple à tonalité positive. Un revêtement antireflets 501 sous-jacent de type BARC (Bottom Anti Reflective Coating signifiant revêtement anti-reflexion de fond) est de préférence intercalé entre le masque dur métallique 300 et le premier masque 400a, comme illustré sur la figure 3A. Le masque 400a en résine photosensible peut présenter une épaisseur comprise entre 50 nm et 300 nm. Cette épaisseur peut être ajustée par exemple suivant le niveau de métal adressé dans l'empilement et par conséquent la résolution des vias. Le revêtement antireflets 501 peut présenter une épaisseur comprise entre 25 nm et 35 nm, par exemple de l'ordre de 30 nm.

Alternativement, le masque 400a peut comprendre deux couches de type SOC (spin on carbon) et SiARC (silicon anti reflective coating signifiant revêtement anti réflexion à base de silicium), ainsi qu'une couche de résine photosensible. Les épaisseurs de ces trois couches varient selon la nature des produits employés ainsi que des dimensions des vias visées. Elles sont typiquement de l'ordre de 150 nm pour le SOC, 30 nm pour le SiARC et environ 100 nm pour la résine.

De préférence, les couches 501, 400a sont déposées par une méthode classique de spin coating (à la tournette).

Les ouvertures 401 du premier masque 400a sont réalisées en mettant en œuvre des techniques classiques de lithographie, telles que la lithographie optique, la lithographie électronique par faisceau d'électrons (ebeam), la lithographie par nanoimpression ou toute autre technique de lithographie connue de l'homme du métier.

Pour obtenir le résultat illustré en figure 3B, une gravure est effectuée dans le masque dur métallique 300 pour y transférer les motifs 401 du masque 400a. Cette gravure est configurée pour former les ouvertures de masque 301.

Le revêtement antireflets 501 et le masque dur métallique 300 peuvent être gravés par plasma, à l'aide d'une chimie de gravure à base de chlore, par exemple Cl2 /BCl3. Ce type de plasma permet d'utiliser un masque 400a à base de résine présentant une fine épaisseur, par exemple inférieure à 200 nm.

Comme illustré à la figure 3C, les ouvertures de masque 301 sont ensuite remplies par des portions 502 de couche organique de type BARC. Une étape de planarisation, par exemple par polissage mécano-chimique CMP, est de préférence effectuée avant de déposer un deuxième masque 400b (figure 3D).

Ce deuxième masque 400b est typiquement à base de résine. Il présente des ouvertures 402 situées au moins en partie au droit des portions 502 et des pistes électriques 10. Les ouvertures 402 présentent une dimension L2 comprise entre 20 nm et 100 nm, par exemple 70 nm. Cette dimension L2 correspond à une dimension caractéristique des vias 30 du niveau d'interconnexion 30A. Le deuxième masque 400b permet notamment de définir les vias 30 du niveau d'interconnexion 30A.

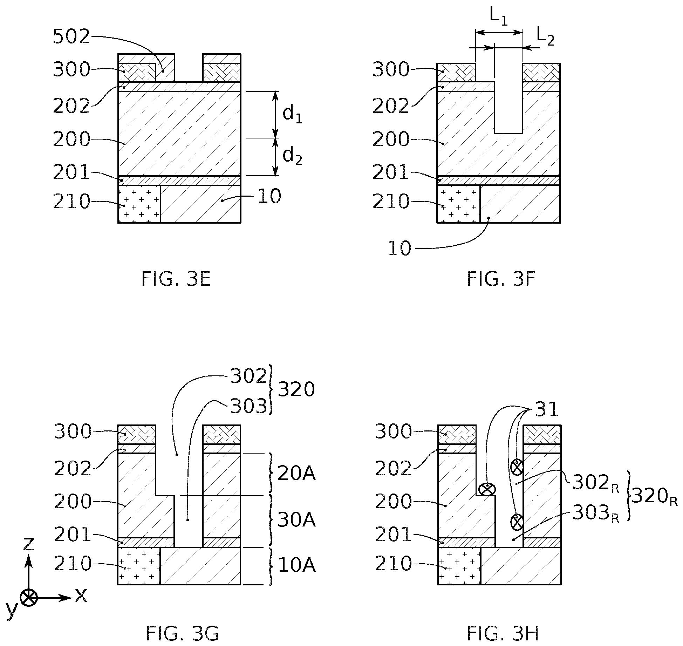

Comme illustré en figure 3E, une première gravure est effectuée pour transférer les motifs 402 du masque 400b dans la couche diélectrique 200 sur une profondeur d₁. La profondeur d₁ peut être comprise entre la moitié et la totalité de l'épaisseur de diélectrique à graver La couche diélectrique 200 ULK est ainsi partiellement gravée. Cette première gravure partielle de la couche diélectrique 200 ULK peut être effectuée par plasma fluorocarboné, par exemple à base d'une chimie C₄F₆ /N₂ /Ar. Cette première gravure est de préférence effectuée dans un réacteur plasma à couplage capacitif CCP (capacitively coupled plasma).

Le masque 400b et la portion 502 restante sont ensuite retirés, par exemple par plasma d'oxygène (figure 3F). Un motif d'ouverture présentant les deux dimensions L₁, L₂ est ainsi formé.

Comme illustré à la figure 3G, ce motif d'ouverture est transféré dans la couche diélectrique 200 ULK par une deuxième gravure. Cela permet de former simultanément une ouverture de piste 302 et une ouverture de via 303 au sein de la couche 200 ULK. Les ouvertures de piste 302 sont destinées à accueillir les pistes 20 du deuxième niveau de piste 20A. Les ouvertures de via 303 sont destinées à accueillir les vias 30 du niveau d'interconnexion 30A. Cette deuxième gravure est effectuée dans la couche 200 ULK sur une profondeur d₂, par exemple comprise entre 200 nm et 2 µm. Les ouvertures de piste 302 présentent ainsi une hauteur d₂ et les ouvertures de via 303 présentent ainsi une hauteur d₁. La couche d'arrêt de gravure 201 permet de contrôler l'arrêt de cette deuxième gravure. Cette deuxième gravure est de préférence effectuée par plasma fluoré, par exemple à base d'une chimie fluorocarbonnée C4F₈ /N₂ /Ar/O₂. La couche d'arrêt de gravure 201est également ouverte à l'issue de la deuxième gravure, par exemple par plasma à base d'une chimie CH₃F /CF₄/ N₂ /Ar, de façon à exposer les pistes 10 du premier niveau de piste 10A.

Après formation des ouvertures 320 comprenant les ouvertures de piste 302 et les ouvertures de via 303, la mise en présence d'humidité et d'oxygène (par exemple par simple remise à l'air) permet de former des résidus 31 au sein des ouvertures 320. Des ouvertures 320_{R} comprenant des résidus 31, par exemple répartis dans les ouvertures de piste 302_{R} et/ou dans les ouvertures de via 303_{R}, sont ainsi obtenues comme illustré à la figure 3H. Les résidus 31 sont typiquement à base d'oxyde métallique, plus précisément à base d'un oxyde du matériau métallique du masque dur 400.

La remise à l'air des ouvertures 320 peut durer quelques heures, par exemple au moins 12h et de préférence environ 24h. Pour augmenter la cinétique de formation des résidus, on pourra utiliser une atmosphère plus riche en oxygène que l'air ambiant et /ou plus humide que l'air ambiant. En effet l'eau et l'oxygène jouent un rôle de catalyseur pour la réaction.

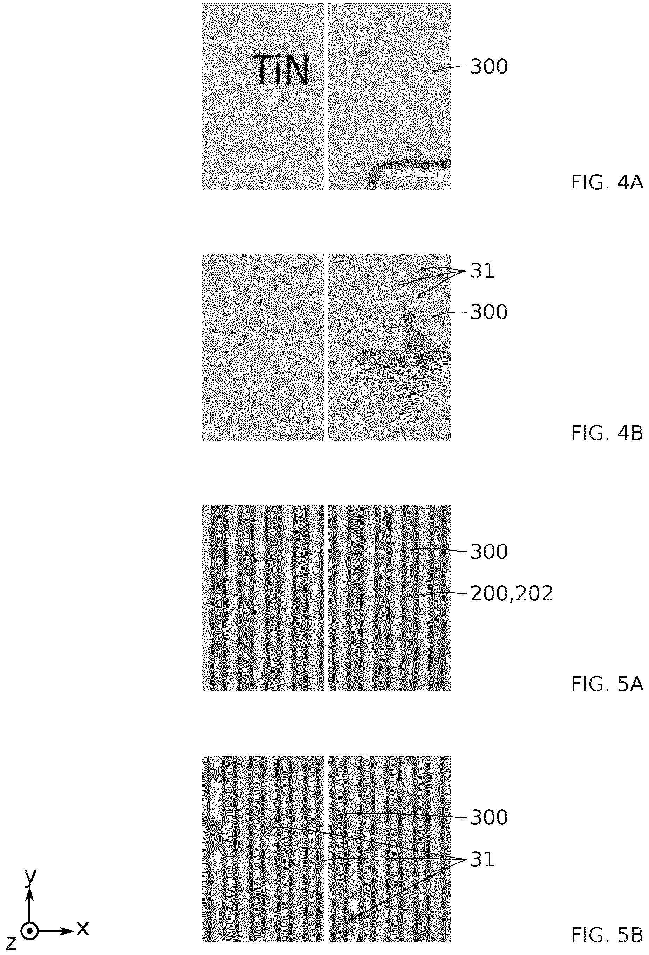

Les figures 4A et 5A montrent deux images de deux masques 300 à base de TiN, juste après avoir effectué les première et deuxième gravures fluorocarbonées. Les figures 4B et 5B montrent deux images de ces mêmes masques 300 à base de TiN, après 24 heures de remise à l'air. De nombreux résidus 31 sont clairement visibles sur ces figures 4B et 5B. Avantageusement, ces résidus se répartissent aléatoirement lors de leur formation, notamment au sein des ouvertures 320.

La formation des résidus 31 ne dépend pas de la nature de la couche diélectrique 200. La formation des résidus 31 peut notamment dépendre du taux de fluor adsorbé en surface du masque dur métallique 300. Elle peut également dépendre du taux d'humidité auquel est exposé le masque dur métallique 300.

L'utilisation de chimies fluorées ou fluorocarbonnées pour les première et deuxième gravures de la couche 200 ULK permet avantageusement de former des composés métalliques fluorés au niveau du masque dur métallique 300. Un exemple non limitatif de mécanisme de formation de ces résidus est maintenant décrit. Dans le cas d'un masque dur métallique à base de Ti, par exemple en TiN, des composés de type TiF₃ et TiF₄ se forment sur les parties exposées du masque 300. Après une remise à l'air, les composés de TiF₃ et TiF₄ s'oxydent par hydrolyse pour former des espèces TiOF. Cette formation libère au passage du fluor sous forme de HF. Cette libération de HF favorise à son tour la formation de sel de TiF₆, qui s'hydrolyse de la même manière que les composés de TiF₃ et TiF₄. La composition des espèces TiOF s'enrichit alors en oxygène pour tendre vers des oxydes de titane TiO₂. Les résidus 31 se forment lors de cette hydrolyse, par agrégation des espèces oxydées. Les résidus 31 sont ici majoritairement composés de TiO₂.

On pourra se référer au document « Residue growth on metallic-hard mask after dielectric etching in fluorocarbon-based plasmas. I. Mechanisms, N. Posseme et al., J. Vac. Sci. Technol. B, 28 (2010) » pour approfondir les mécanismes de formation de ces résidus.

Ces résidus 31 empêchent ensuite un bon remplissage des ouvertures 320 par le matériau conducteur - typiquement le cuivre - formant les vias 30 et/ou les pistes 20. Ils peuvent notamment dégrader la conformité du dépôt de la couche barrière 40 (visible en figures 1B, 2B) dont le rôle est d'éviter une diffusion du métal des vias ou des pistes dans la couche diélectrique 200. Des défauts 32 sont ainsi créés, typiquement des cavités au sein des vias 30 et/ou des pistes 20. Ces défauts 32 peuvent survenir lors d'une étape ultérieure de planarisation, par exemple par CMP, après remplissage des ouvertures 320.

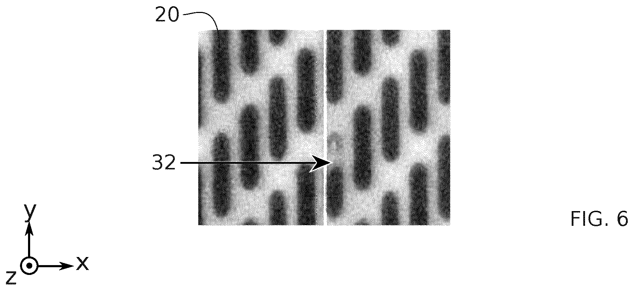

La figure 6 est une image vue de dessus de pistes 20 dans la zone d'individualisation 1. Un défaut 32 sous forme de vide ou cavité obtenu par le procédé décrit ci-dessus est clairement visible.

D'autres modes de réalisation du procédé sont évidemment possibles. Le procédé peut notamment être mis en œuvre dans le cadre d'une technique de fabrication classique dite « damascene ». Dans ce cas les ouvertures 320 comprennent uniquement des ouvertures de via 303, ou uniquement des ouvertures de piste 302.

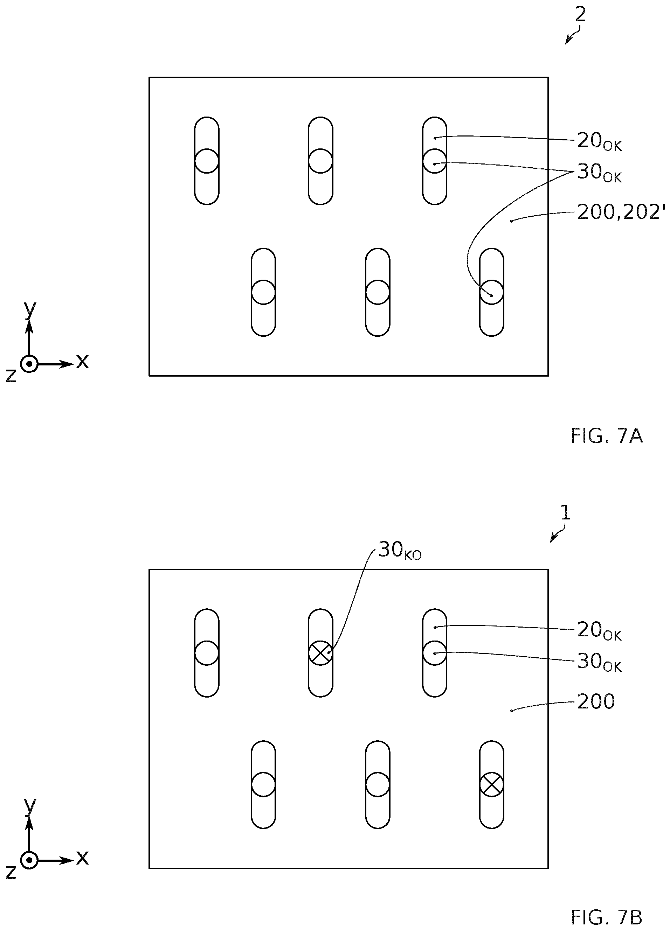

Il peut être envisagé d'associer un seul via 30 par piste 20, comme illustré aux figures 7A, 7B. Dans ce cas, la conductivité par piste 20 est binaire : soit le via 30 est un via fonctionnel 30_{OK}, et la piste présente une conductivité électrique nominale (c'est le cas des pistes 20 dans la zone fonctionnelle 2 illustrée à la figure 7A), soit le via 30 est un via inactif 30_{KO}, et la piste présente une conductivité électrique nulle (c'est le cas de certaines pistes 20 dans la zone d'individualisation 1 illustrée à la figure 7B). Cela permet de simplifier la conception de la zone d'individualisation 1. Cela permet de simplifier la mise en œuvre du procédé.

L'invention est typiquement mise en œuvre pour réaliser une zone d'individualisation 1 (zone PUF) dans un circuit intégré comprenant par ailleurs une zone fonctionnelle 2 (zone non PUF). Dans ce cas, le procédé de réalisation de la zone d'individualisation est mis en œuvre sur une partie seulement du circuit intégré.

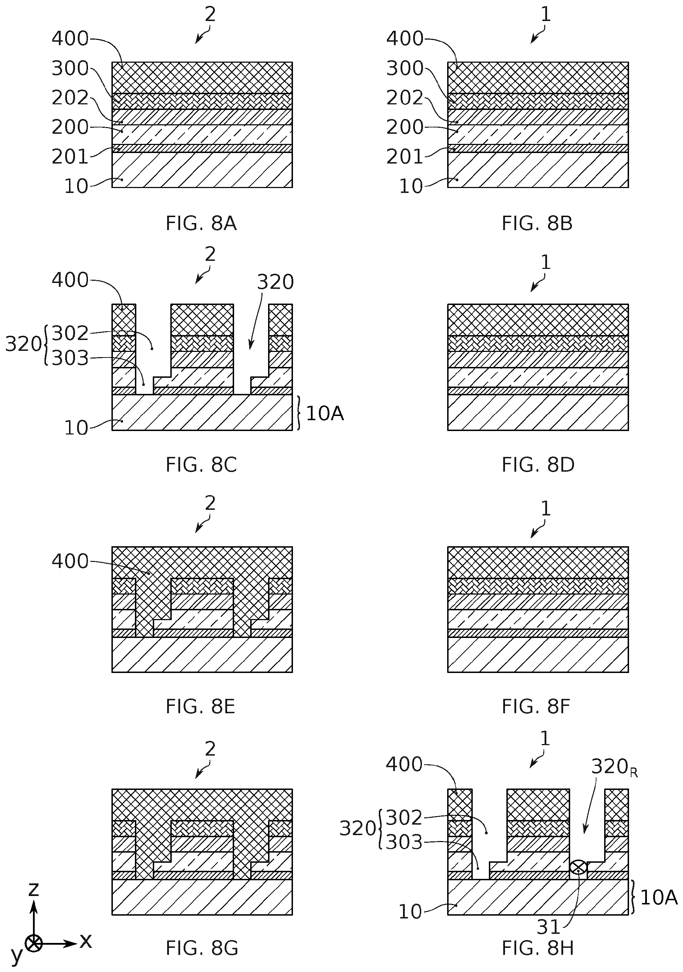

Les figures 8A à 8H illustrent la fabrication de zones PUF et non PUF sur un même circuit intégré. En particulier, les figures 8A, 8C, 8E, 8G illustrent des étapes effectuées dans la zone non PUF et les figures 8B, 8D, 8F, 8H illustrent des étapes effectuées dans la zone PUF, en parallèle.

Comme illustré aux figures 8A, 8B, le même empilement comprenant au moins le premier niveau de pistes 10, la couche diélectrique 200 et le masque dur métallique 300 est formé au niveau des zones PUF et non PUF.

Les ouvertures 320 visant à former les vias et/ou les pistes du deuxième niveau sont d'abord formées dans la zone non PUF (figure 8C), tandis que la zone PUF reste protégée (figure 8D), typiquement par un masque de protection. Ce masque de protection peut être à base de résine 400 comme illustré, ou peut être formé sur la résine 400 destinée à la lithographie des vias et/ou des pistes du deuxième niveau (non illustré).

Les ouvertures 320 de la zone non PUF sont ensuite protégées, typiquement par remplissage d'une résine 400 (figure 8E). Le masque de protection peut alors être retiré de la zone PUF. La zone PUF est alors prête pour une lithographie des vias et/ou des pistes du deuxième niveau (figure 8F).

Les ouvertures 320, 320_{R} visant à former les vias et/ou les pistes du deuxième niveau sont alors formées dans la zone PUF (figure 8H), tandis que la zone non PUF reste protégée (figure 8G), typiquement par un masque de protection ou par la résine 400 remplissant les ouvertures 320 de la zone non PUF.

Des résidus 31 sont alors formés aléatoirement dans certaines ouvertures 320_{R} de la zone PUF, par exemple par remise à l'air pendant quelques heures (figure 8H).

La résine 400 des zones PUF et non PUF peut alors être retirée, et les ouvertures 320, 320_{R} des zones PUF et non PUF peuvent être remplies simultanément par un matériau conducteur, de façon à former des vias fonctionnels 30_{OK} et des vias inactifs 30_{KO}, comme décrits dans le procédé ci-dessus.

Au vu de la description qui précède, il apparaît clairement que le procédé proposé offre une solution particulièrement efficace pour réaliser une zone d'individualisation de type PUF.

Le mode de réalisation décrit ci-dessus s'intègre dans la fabrication de composés semi-conducteur au niveau du back end dit « cuivre ». L'invention s'étend néanmoins à des modes de réalisation utilisant un autre matériau conducteur que le cuivre. Pour cela, l'homme du métier saura sans difficulté effectuer les adaptations nécessaires en termes de choix de matériaux et d'étapes de procédé.

## Revendications

1. Procédé de réalisation d'une zone d'individualisation (1) d'une puce microélectronique, ladite puce comprenant au moins :
- un premier (10A) et un deuxième (20A) niveaux de pistes électriques (10, 20),
- un niveau (30A) d'interconnexions situées entre les premiers (10A) et deuxième (20A) niveaux de pistes électriques (10, 20) et comportant des vias (30) destinés à connecter électriquement des pistes électriques (10) du premier niveau (10A) avec des pistes électriques (20) du deuxième niveau (20A),
- la puce présentant au moins une autre zone, distincte de la zone d'individualisation (1), destinée à former une zone fonctionnelle (2) de la puce,
le procédé comprenant au moins les étapes suivantes effectuées au niveau de la zone d'individualisation (1) de la puce :
- fournir au moins le premier niveau (10A) de pistes électriques (10) et au moins une couche diélectrique (200, 201, 202) recouvrant le premier niveau (10A),
- réaliser sur l'au moins une couche diélectrique (200, 201, 202) un masque dur métallique (300) présentant des ouvertures de masque (301) situées au moins en partie au droit des pistes électriques (10) et rendant accessible l'au moins une couche diélectrique (200, 201, 202),
- graver l'au moins une couche diélectrique (200, 201, 202) au travers des ouvertures de masque (301) par au moins une gravure à base d'une chimie fluorocarbonée, de façon à former des ouvertures (320) débouchant sur le premier niveau (10A) des pistes électriques (10),
- mettre le masque dur métallique (300) en présence d'oxygène et d'humidité de façon à former des résidus (31) aléatoirement répartis au niveau de certaines ouvertures (320_{R}), les ouvertures (320, 320_{R}) comprenant alors des ouvertures avec résidus (320_{R}) et des ouvertures sans résidus (320),
- remplir les ouvertures (320, 320_{R}) avec un matériau électriquement conducteur de sorte à former au moins les vias (30) du niveau (30A) d'interconnexions, lesdits vias (30) comprenant des vias fonctionnels (30_{OK}) au niveau des ouvertures sans résidus (320) et des vias inactifs (30_{KO}) au niveau des ouvertures avec résidus (320_{R}),
- ledit procédé comprenant en outre, préalablement à la formation des résidus (31) dans la zone d'individualisation (1), une formation d'un masque de protection sur la zone destinée à former la zone fonctionnelle (2).

2. Procédé selon la revendication précédente dans lequel les ouvertures (320) présentent une dimension minimale L₂ inférieure à 90 nm et de préférence inférieure à 70 nm.

3. Procédé selon l'une quelconque des revendications précédentes dans lequel la mise en présence d'oxygène et d'humidité du masque dur métallique (300) se fait sous une atmosphère présentant un taux d'oxygène et/ou un taux d'humidité plus élevé que l'air ambiant.

4. Procédé selon l'une quelconque des revendications 1 à 2 dans lequel la mise en présence d'oxygène et d'humidité du masque dur métallique (300) se fait par remise à l'air.

5. Procédé selon la revendication précédente dans lequel la mise en présence d'oxygène et d'humidité du masque dur métallique (300) se fait par remise à l'air pendant au moins douze heures, de préférence au moins vingt-quatre heures.

6. Procédé selon l'une quelconque des revendications précédentes dans lequel le masque dur métallique (300) est à base de Ti ou de TiN ou de TaN.

7. Procédé selon l'une quelconque des revendications précédentes dans lequel l'au moins une gravure est une gravure plasma.

8. Procédé selon l'une quelconque des revendications précédentes dans lequel l'au moins une gravure est configurée pour former des ouvertures (320, 320_{R}) comprenant chacune une ouverture de vias (303, 303_{R}) et une ouverture de piste (302, 302_{R}), et dans lequel le remplissage desdites ouvertures (320, 320_{R}) avec un matériau électriquement conducteur est configuré de sorte à former les vias (30) du niveau (30A) d'interconnexions au niveau desdites ouvertures de vias (303, 303_{R}) et à former simultanément les pistes électriques (20) du deuxième niveau (20A) au niveau desdites ouvertures de piste (302, 302_{R}).

9. Procédé selon la revendication précédente dans lequel l'au moins une gravure comprend une première gravure et une deuxième gravure destinées à former respectivement les ouvertures de vias (303, 303_{R}) et les ouvertures de piste (302, 302_{R}).

10. Procédé selon l'une quelconque des revendications précédentes dans lequel l'au moins une couche diélectrique (200, 201, 202) comprend une couche à base de SiOCH dense ou poreux (p-SiOCH), ou à base de SiO₂.

11. Procédé selon l'une quelconque des revendications précédentes dans lequel plusieurs vias (30, 30_{OK}, 30_{KO}) sont associés à une même piste électrique du deuxième niveau (20A) et à une même piste électrique du premier niveau (10A).

12. Procédé de réalisation d'un dispositif microélectronique comportant au moins un circuit intégré, le circuit intégré comportant au moins:
- un premier (10A) et un deuxième (20A) niveaux des pistes électriques (10, 20),
- un niveau (30A) d'interconnexions situé entre les premiers (10A) et deuxième (20A) niveaux des pistes électriques et comportant des via (30) destinées à connecter électriquement des pistes (10) du premier niveau (10A) avec des pistes (20) du deuxième niveau (20A),
- une zone d'individualisation (1) réalisée en mettant en œuvre le procédé selon l'une quelconque des revendications précédentes sur une partie seulement du circuit intégré
- une zone fonctionnelle (2) disjointe de la zone d'individualisation et protégée par un masque de protection lors de la mise en œuvre du procédé selon l'une quelconque des revendications précédentes.

13. Dispositif microélectronique comportant au moins un circuit intégré, le circuit intégré comportant au moins une zone d'individualisation (1) et une zone fonctionnelle (2) disjointes, la zone d'individualisation (1) et la zone fonctionnelle (2) comprenant
- un premier (10A) et un deuxième (20A) niveaux des pistes électriques (10, 20),
- un niveau (30A) d'interconnexions situé entre les premiers (10A) et deuxième (20A) niveaux des pistes électriques et comportant des vias (30) destinées à connecter électriquement des pistes (10) du premier niveau (10A) avec des pistes (20) du deuxième niveau (20A),
**caractérisé en ce que** la zone fonctionnelle (2) comprend essentiellement des vias fonctionnels (30_{OK}) ne présentant pas de défauts (32) tels que des résidus (31) d'oxyde métallique ou des cavités, et **en ce que** la zone d'individualisation (1) comprend des vias inactifs (30_{KO}) présentant des défauts (32) tels que des résidus (31) d'oxyde métallique ou des cavités, la densité de vias inactifs (30_{KO}) dans la zone d'individualisation (1) étant supérieure d'au moins 80% à la densité de vias inactifs (30_{KO}) dans la zone fonctionnelle (2).

14. Dispositif microélectronique selon la revendication précédente, dans lequel la zone fonctionnelle (2) présente une surface au moins deux fois supérieure à celle de la zone d'individualisation (1).

15. Dispositif microélectronique selon la revendication précédente, dans lequel la zone d'individualisation (1) s'étend sur au moins 5% et de préférence sur au moins 10% de la surface du circuit intégré.

## Patentansprüche

1. Verfahren zum Herstellen eines Individualisierungsbereichs (1) eines mikroelektronischen Chips, wobei der Chip mindestens Folgendes umfasst:
- eine erste (10A) und eine zweite (20A) Ebene von elektrischen Leiterbahnen (10, 20),
- eine Verbindungsebene (30A), die sich zwischen der ersten (10A) und der zweiten (20A) Ebene von elektrischen Leiterbahnen (10, 20) befindet und Durchkontaktierungen (30) enthält, die dazu bestimmt sind, elektrische Leiterbahnen (10) der ersten Ebene (10A) mit elektrischen Leiterbahnen (20) der zweiten Ebene (20A) elektrisch zu verbinden,
- wobei der Chip mindestens einen anderen Bereich aufweist, der sich vom Individualisierungsbereich (1) unterscheidet und dazu bestimmt ist, einen funktionalen Bereich (2) des Chips zu bilden,
wobei das Verfahren mindestens die folgenden Schritte umfasst, die am Individualisierungsbereich (1) des Chips durchgeführt werden:
- Bereitstellen mindestens der ersten Ebene (10A) von elektrischen Leiterbahnen (10) und mindestens einer dielektrischen Schicht (200, 201, 202), die die erste Ebene (10A) abdeckt,
- Herstellen einer harten Metallmaske (300), die Maskenöffnungen (301) aufweist, die sich mindestens teilweise auf Höhe der elektrischen Leiterbahnen (10) befinden und die mindestens eine dielektrische Schicht (200, 201, 202) zugänglich machen, auf der mindestens einen dielektrischen Schicht (200, 201, 202),
- Ätzen der mindestens einen dielektrischen Schicht (200, 201, 202) durch die Maskenöffnungen (301) hindurch durch mindestens eine Ätzung auf Basis einer Fluorkohlenstoffchemie, so dass Öffnungen (320) gebildet werden, die in die erste Ebene (10A) der elektrischen Leiterbahnen (10) münden,
- Inkontaktbringen der harten Metallmaske (300) mit Sauerstoff und Feuchtigkeit, so dass sich an bestimmten Öffnungen (320_{R}) zufällig verteilte Rückstände (31) bilden, wobei die Öffnungen (320, 320_{R}) dann Öffnungen mit Rückständen (320_{R}) und Öffnungen ohne Rückstände (320) umfassen,
- Füllen der Öffnungen (320, 320_{R}) mit einem elektrisch leitenden Material, so dass mindestens die Durchkontaktierungen (30) der Ebene (30A) von Verbindungen gebildet werden, wobei die Durchkontaktierungen (30) funktionale Durchkontaktierungen (30_{OK}) an den Öffnungen ohne Rückstände (320) und inaktive Durchkontaktierugnen (30_{KO}) an den Öffnungen mit Rückständen (320_{R}) umfassen,
- wobei das Verfahren ferner vor dem Bilden der Rückstände (31) im Individualisierungsbereich (1) ein Bilden einer Schutzmaske auf dem Bereich umfasst, der dazu bestimmt ist, den funktionalen Bereich (2) zu bilden.

2. Verfahren nach dem vorhergehenden Anspruch, wobei die Öffnungen (320) eine Mindestabmessung L₂ von weniger als 90 nm und vorzugsweise weniger als 70 nm aufweisen.

3. Verfahren nach einem der vorhergehenden Ansprüche, wobei das Inkontaktbringen der harten Metallmaske (300) mit Sauerstoff und Feuchtigkeit unter einer Atmosphäre mit einem höheren Sauerstoffgehalt und/oder einem höheren Feuchtigkeitsgehalt als die Umgebungsluft erfolgt.

4. Verfahren nach einem der Ansprüche 1 bis 2, wobei das Inkontaktbringen der harten Metallmaske (300) mit Sauerstoff und Feuchtigkeit durch Belüftung erfolgt.

5. Verfahren nach dem vorhergehenden Anspruch, wobei das Inkontaktbringen der harten Metallmaske (300) mit Sauerstoff und Feuchtigkeit durch Belüftung für mindestens zwölf Stunden, vorzugsweise mindestens vierundzwanzig Stunden, erfolgt.

6. Verfahren nach einem der vorhergehenden Ansprüche, wobei die harte Metallmaske (300) auf Ti- oder TiN- oder TaN-Basis ist.

7. Verfahren nach einem der vorhergehenden Ansprüche, wobei die mindestens eine Ätzung eine Plasmaätzung ist.

8. Verfahren nach einem der vorhergehenden Ansprüche, wobei die mindestens eine Ätzung so eingerichtet ist, dass sie Öffnungen (320, 320_{R}) bildet, die jeweils eine Durchkontaktierungsöffnung (303, 303R) und eine Leiterbahnöffnung (302, 302_{R}) umfassen, und wobei das Füllen der Öffnungen (320, 320_{R}) mit einem elektrisch leitenden Material so eingerichtet ist, dass es die Durchkontaktierungen (30) der Ebene (30A) von Verbindungen an den Durchkontaktierungsöffnungen (303, 303_{R}) und gleichzeitig die elektrischen Leiterbahnen (20) der zweiten Ebene (20A) an den Leiterbahnöffnungen (302, 302_{R}) bildet.

9. Verfahren nach dem vorhergehenden Anspruch, wobei die mindestens eine Ätzung eine erste Ätzung und eine zweite Ätzung umfasst, die dazu bestimmt sind, die Durchkontaktierungsöffnungen (303, 303_{R}) und die Leiterbahnöffnungen (302, 302_{R}) zu bilden.

10. Verfahren nach einem der vorhergehenden Ansprüche, wobei die mindestens eine dielektrische Schicht (200, 201, 202) eine Schicht auf Basis von dichtem oder porösem SiOCH (p-SiOCH) oder auf Basis von SiO₂ umfasst.

11. Verfahren nach einem der vorhergehenden Ansprüche, wobei mehrere Durchkontaktierungen (30, 30_{OK}, 30_{KO}) mit derselben elektrischen Leiterbahn der zweiten Ebene (20A) und derselben elektrischen Leiterbahn der ersten Ebene (10A) verbunden sind.

12. Verfahren zum Herstellen einer mikroelektronischen Vorrichtung, die mindestens eine integrierte Schaltung umfasst, wobei die integrierte Schaltung mindestens Folgendes umfasst:
- eine erste (10A) und eine zweite (20A) Ebene von Leiterbahnen (10, 20),
- eine Ebene (30A) von Verbindungen, die sich zwischen der ersten (10A) und der zweiten (20A) Ebene der elektrischen Leiterbahnen befindet und Durchkontaktierungen (30) enthält, die dazu bestimmt sind, Leiterbahnen (10) der ersten Ebene (10A) mit Leiterbahnen (20) der zweiten Ebene (20A) elektrisch zu verbinden,
- einen Individualisierungsbereich (1), der durch die Durchführung des Verfahrens nach einem der vorhergehenden Ansprüche nur an einem Teil der integrierten Schaltung hergestellt wird,
- einen funktionalen Bereich (2), der von dem Individualisierungsbereich getrennt ist und bei der Durchführung des Verfahrens nach einem der vorhergehenden Ansprüche durch eine Schutzmaske geschützt wird.

13. Mikroelektronische Vorrichtung, die mindestens eine integrierte Schaltung umfasst, wobei die integrierte Schaltung mindestens einen Individualisierungsbereich (1) und einen funktionalen Bereich (2) umfasst, die voneinander getrennt sind, wobei der Individualisierungsbereich (1) und der funktionale Bereich (2) Folgendes umfassen:
- eine erste (10A) und eine zweite (20A) Ebene von Leiterbahnen (10, 20),
- eine Ebene (30A) von Verbindungen, die sich zwischen der ersten (10A) und der zweiten (20A) Ebene der elektrischen Leiterbahnen befindet und Durchkontaktierungen (30) enthält, die dazu bestimmt sind, die Leiterbahnen (10) der ersten Ebene (10A) mit den Leiterbahnen (20) der zweiten Ebene (20A) elektrisch zu verbinden,
**dadurch gekennzeichnet, dass** der funktionale Bereich (2) im Wesentlichen funktionale Durchkontaktierungen (30_{OK}) umfasst, die keine Fehler (32) wie Metalloxidrückstände (31) oder Hohlräume aufweisen, und dass der Individualisierungsbereich (1) inaktive Durchkontaktierungen (30_{KO}) umfasst, die Fehler (32) wie Metalloxidrückstände (31) oder Hohlräume aufweisen, wobei die Dichte an inaktiven Durchkontaktierungen (30_{KO}) im Individualisierungsbereich (1) mindestens 80 % höher ist als die Dichte an inaktiven Durchkontaktierungen (30_{KO}) im funktionalen Bereich (2).

14. Mikroelektronische Vorrichtung nach dem vorhergehenden Anspruch, wobei der funktionale Bereich (2) eine Oberfläche aufweist, die mindestens doppelt so groß ist wie der Individualisierungsbereich (1).

15. Mikroelektronische Vorrichtung nach dem vorhergehenden Anspruch, wobei sich der Individualisierungsbereich (1) über mindestens 5 % und vorzugsweise über mindestens 10 % der Oberfläche der integrierten Schaltung erstreckt.

## Claims

1. A method for making an individualisation zone (1) of a microelectronic chip, said chip comprising at least:
- a first (10A) and a second (20A) levels of electrical tracks (10, 20),
- a level (30A) of interconnections located between the first (10A) and second (20A) levels of electrical tracks (10, 20) and including vias (30) for electrically connecting electrical tracks (10) of the first level (10A) with electrical tracks (20) of the second level (20A),
- the chip having at least one other zone, distinct from the individualisation zone (1), for forming a functional zone (2) of the chip,
the method comprising at least the following steps performed at the individualisation zone (1) of the chip:
- providing at least the first level (10A) of electrical tracks (10) and at least one dielectric layer (200, 201, 202) covering the first level (10A),
- making on the at least one dielectric layer (200, 201, 202) a metal hard mask (300) having mask apertures (301) located at least partly in line with the electrical tracks (10) and making the at least one dielectric layer (200, 201, 202) accessible,
- etching the at least one dielectric layer (200, 201, 202) through the mask apertures (301) by at least one fluorocarbon chemistry-based etching, so as to form apertures (320) leading to the first level (10A) of the electrical tracks (10),
- placing the metal hard mask (300) in the presence of oxygen and moisture so as to form residues (31) randomly distributed at some apertures (320_{R}), the apertures (320, 320_{R}) then comprising apertures with residues (320_{R}) and apertures without residues (320),
- filling the apertures (320, 320_{R}) with an electrically conductive material so as to form at least the vias (30) of the level (30A) of interconnections, said vias (30) comprising functional vias (30_{OK}) at the apertures without residues (320) and inactive vias (30_{KO}) at the apertures with residues (320_{R}),
- said method further comprising, prior to forming the residues (31) in the individualisation zone (1), forming a protective mask on the zone intended to form the functional zone (2).

2. The method according to the preceding claim, wherein the apertures (320) have a minimum dimension L₂ smaller than 90 nm and preferably smaller than 70 nm.

3. The method according to any one of the preceding claims, wherein placing the metal hard mask (300) in the presence of oxygen and moisture takes place under an atmosphere having an oxygen rate and/or a humidity rate higher than ambient air.

4. The method according to any one of claims 1 to 2, wherein placing the metal hard mask (300) in the presence of oxygen and moisture is done by venting.

5. The method according to the preceding claim, wherein placing the metal hard mask (300) in the presence of oxygen and moisture is carried out by venting for at least twelve hours, preferably at least twenty-four hours.

6. The method according to any one of the preceding claims, wherein the metal hard mask (300) is based on Ti or TiN or TaN.

7. The method according to any one of the preceding claims, wherein the at least one etching is plasma etching.

8. The method according to any one of the preceding claims, wherein the at least one etching is configured to form apertures (320, 320_{R}) each comprising a via aperture (303, 303_{R}) and a track aperture (302, 302R), and wherein filling said apertures (320, 320_{R}) with an electrically conductive material is configured so as to form the vias (30) of the level (30A) of interconnections at said via apertures (303, 303_{R}) and to simultaneously form the electrical tracks (20) of the second level (20A) at said track apertures (302, 302_{R}).

9. The method according to the preceding claim, wherein the at least one etching comprises a first etching and a second etching for forming the via apertures (303, 303_{R}) and the track apertures (302, 302_{R}) respectively.

10. The method according to any one of the preceding claims, wherein the at least one dielectric layer (200, 201, 202) comprises a layer based on dense or porous SiOCH (p-SiOCH), or based on SiO₂.

11. The method according to any one of the preceding claims, wherein several vias (30, 30_{OK}, 30_{KO}) are associated with a same electrical track of the second level (20A) and with a same electrical track of the first level (10A).

12. A method for making a microelectronic device comprising at least one integrated circuit, the integrated circuit comprising at least:
- a first (10A) and a second (20A) levels of the electrical tracks (10, 20),
- a level (30A) of interconnections located between the first (10A) and second (20A) levels of the electrical tracks and comprising vias (30) intended to electrically connect tracks (10) of the first level (10A) with tracks (20) of the second level (20A),
- an individualisation zone (1) made by implementing the method according to any one of the preceding claims on only part of the integrated circuit
- a functional zone (2) separated from the individualisation zone and protected by a protective mask upon implementing the method according to any one of the preceding claims.

13. A microelectronic device comprising at least one integrated circuit, the integrated circuit comprising at least one individualisation zone (1) and one functional zone (2) which are disjoined, the individualisation zone (1) and the functional zone (2) comprising
- a first (10A) and a second (20A) levels of the electrical tracks (10, 20),
- a level (30A) of interconnections located between the first (10A) and second (20A) levels of the electrical tracks and including vias (30) for electrically connecting tracks (10) of the first level (10A) with tracks (20) of the second level (20A),
**characterised in that** the functional zone (2) essentially comprises functional vias (30_{OK}) having no defects (32) such as metal oxide residues (31) or cavities, and **in that** the individualisation zone (1) comprises inactive vias (30_{KO}) having defects (32) such as metal oxide residues (31) or cavities, the density of inactive vias (30_{KO}) in the individualisation zone (1) being at least 80% higher than the density of inactive vias (30_{KO}) in the functional zone (2).

14. The microelectronic device according to the preceding claim, wherein the functional zone (2) has a surface area at least twice that of the individualisation zone (1).

15. The microelectronic device according to the preceding claim, wherein the individualisation zone (1) extends over at least 5% and preferably over at least 10% of the surface area of the integrated circuit.
